# EUROPÄISCHE PATENTANMELDUNG

(11) **EP 3 120 985 A1**
(43) Veröffentlichungstag der Anmeldung: **25.01.2017**
(21) Anmeldenummer: 16180843.1
(22) Anmeldetag: 22.07.2016
(51) Int. Cl.: B29C 44/12, E04B 1/80, B32B 5/18

(54) **VERFAHREN ZUR HERSTELLUNG EINES DÄMMELEMENTS SOWIE EIN ENTSPRECHENDES DÄMMELEMENT**

(30) Priorität: 24.07.2015 DE 102015112152
(71) Anmelder: ISOVER SAINT-GOBAIN, 92400 Courbevoie (FR)
(72) Erfinder: Middendorf, Hans-Dieter, 33415 Verl (DE)
(74) Vertreter: Kuhnen & Wacker

(57) **Zusammenfassung**

Die Erfindung betrifft ein Verfahren zur Herstellung eines Dämmelements (1), mit den Schritten: Bereitstellen eines Dämmkerns (3) aus einem ersten Dämmmaterial, Aufbringen eines unter Wärmeeinwirkung aktivierbaren Klebers (5) wenigstens auf Teilbereiche der Außenoberfläche des Dämmkerns (4), Positionieren des Dämmkerns (3) in einer Form (6), Umschäumen des Dämmkerns (3) mit einem als zweites Dämmmaterial dienenden Kunststoff, welcher sich vom ersten Dämmmaterial unterscheidet, in der Form zur Bildung einer Umhüllung (2), welche den Dämmkern (3) vollständig umschließt, und Entnahme des so ausgebildeten Dämmelements (1) aus der Form (6), wobei der Kleber (5) im Zuge des Umschäumens des Dämmkerns (3) mit dem zweiten Dämmmaterial durch die hierbei aufgebrachte Wärmeeinwirkung aktiviert wird, so dass das Aufschäumen des zweiten Dämmmaterials und das Verkleben desselben mit dem Dämmkern in einem Verfahrensschritt erfolgen und es zu einem Verschmelzen dieser an deren Grenzfläche kommt. Die Erfindung betrifft ferner ein derartiges Dämmelement (1). Damit lässt sich die Herstellung eines solchen Dämmelements (1) vereinfachen und zugleich ein Dämmelement (1) schaffen, welches auch auf Dauer seine Dämmeigenschaften aufrecht erhält.

## Beschreibung

Die Erfindung betrifft ein Verfahren zur Herstellung eines Dämmelements mit wenigstens zwei unterschiedlichen Dämmmaterialien nach Anspruch 1. Sie betrifft darüber hinaus auch ein Dämmelement mit den Merkmalen des Oberbegriffs des Anspruches 9.

Zur Wärme- bzw. Schalldämmung an Fassaden wie auch von Dächern ist es weithin bekannt, geschäumte Kunststoffe als Dämmelemente einzusetzen. Zumeist kommt hier ein Polystyrol zum Einsatz, wie insbesondere ein expandiertes Polystyrol (EPS). Polystyrole sind dabei gut geeignete Putzträgermaterialien. Die Dämmwirkung dieses Werkstoffs ist jedoch begrenzt, was insbesondere daran liegt, dass das Zellgas Luft ist und dass Polystyrol einen durchaus erheblichen Anteil an Infrarotstrahlung hindurch lässt.

Um die Dämmwirkung zu verbessern, wurden in der Praxis bislang verschiedene Maßnahmen geprüft. So wurden beispielsweise Trübungsmittel in das Polystyrol eingebracht, wodurch der Durchgang an Infrarotstrahlung verringert werden konnte. Damit ließ sich eine etwas verbesserte Wärmedämmwirkung erreichen.

Um eine noch weitergehende Verbesserung der Dämmwirkung zu erzielen, wurden auch alternative Werkstoffe getestet. So ist es auch bekannt geworden, anstelle von Polystyrol ein Polyurethan (PUR) oder neuerdings vermehrt ein Polyisocyanurat (PIR) zu verwenden. Mit hieraus ausgebildeten Hartschaumplatten lassen sich sehr gute Dämmwerte erzielen. So ist hiermit beispielsweise eine Wärmeleitfähigkeit λ von 0,023 W/mK erreichbar. Diese vorteilhaften Eigenschaften beruhen insbesondere darauf, dass in den Poren des geschäumten Kunststoffes nicht Luft, sondern Gase mit einer geringeren Wärmeleitfähigkeit als Luft, wie etwa Kohlendioxid oder bestimmte Kohlenwasserstoffe als Zellgas vorliegen. Üblicherweise werden PUR oder PIR Dämmstoffe in einem Bandverfahren hergestellt, bei dem beidseitig Deckschichten kaschiert werden. Diese Deckschichten werden zur Vermeidung des Verklebens in der Produktionsanlage und zur Einstellung der Produktdicke benötigt, zusätzlich können sie abhängig vom Kaschiermaterial eine Diffusionsbarriere für das Zellgas darstellen. Es werden auch PUR/PIR Platten ohne eine solche Kaschierung bzw. Deckschicht angeboten.

Nachteilig an den Dämmstoffen PUR oder PIR ist jedoch, dass ein Putz hierauf nur schlecht haftet, weshalb sich diese nicht so ohne weiteres als Dämmmaterial in Wärmedämmverbundsystemen eignen.

Es wurde daher bereits vorgeschlagen, die vorteilhaften Eigenschaften von Polystyrol und PUR dadurch miteinander zu verbinden, dass man ein Dämmelement mit einem Kern aus PUR sowie einer Ummantelung aus Polystyrol bereitstellt. Ein derartiges Produkt ist aus der EP 0 947 638 A2 bekannt geworden. Der Kern kann dabei durch das Polystyrol vollständig umschäumt sein, so dass er hierin eingebettet ist. Um dabei einen sicheren Halt dieser beiden Werkstoffe zueinander zu erzielen, kann ein Formschluss durch Nuten hergestellt werden, wobei insbesondere an den Stirnseiten des Kerns schwalbenschwanzförmige Vertiefungen vorgesehen sind. Dadurch wird eine Dämmplatte erzielt, welche sehr gute Dämmeigenschaften aufweist und zugleich als Putzträgerplatte gut geeignet ist.

In der Praxis hat sich jedoch gezeigt, dass sich die Dämmwirkung bei derartigen Dämmplatten im Laufe der Zeit verringert. Untersuchungen haben hier ergeben, dass dies daran liegt, dass das Zellgas im PUR- oder PIR-Kern durch Diffusion schwindet bzw. nach und nach von Luft ersetzt wird. Die Ummantelung aus Polystyrol ist dabei nicht geeignet, einen Diffusionsschutz bereitzustellen.

Aus der DE 20 2009 001 999 U1 ist ferner eine Dämmplatte bekannt geworden, welche ebenfalls aus zwei miteinander verbundenen Elementen aus verschiedenen geschäumten Kunststoffen besteht und für Fassaden, Decken oder dergleichen eingesetzt werden kann. Die Kernschicht ist dabei aus Polyurethan ausgebildet, während beidseits hiervon je eine Deckschicht aus Polystyrol aufkaschiert ist. Alternativ kann der PUR-Schaum für die Kernschicht bei einer Bandfertigung auch von einem Extruder zwischen die beiden Polystyrol-Deckschichten eingespritzt werden. In einem anschließenden Durchlaufofen wird dann eine innige Verbindung der Kernschicht mit den beiden Deckschichten hergestellt. In dieser Ausführungsform kann die Kernschicht auch auf beiden Seiten mit einer Folie aus Aluminium abgedeckt sein. Diese dienen hier bei der kontinuierlichen Bandfertigung als Trägermaterial für den Polyurethanschaum. Auf die beiden Folien ist ferner mithilfe eines handelsüblichen Klebers jeweils die Deckschicht aus Polystyrol aufgeklebt. Der Kleber ist erforderlich, weil geschäumtes Polystyrol auf Aluminium nicht hinreichend haftet.

Auch wenn die beiden hier verwendeten Aluminiumfolien grundsätzlich geeignet sind, um eine gewisse Diffusionsdichtheit des PUR-Kerns herzustellen, so ist dies in diesem Stand der Technik jedoch nicht der Zweck für deren Anordnung; zudem wird auch keine vollständige Diffusionsdichtheit erzielt, da die Folien nur auf den Großflächen, nicht jedoch an den Stirnflächen des Kerns vorliegen. Auch hier kommt es somit im Laufe der Zeit zu einer Verminderung der Wärmedämmfähigkeit.

Ferner ist aus der WO 2014/096633 A1 ein Fassadendämmelement bekannt geworden, bei dessen Herstellung ein Vakuumisolationspaneel in einer Form angeordnet und mit einem Kunststoff umschäumt wird. Durch dieses vollständige Einschließen des Vakuumisolationspanels liegt dieses besonders geschützt vor. Gemäß dieser Schrift wird jedoch kein Kleber eingesetzt, um die Verbindungfestigkeit zwischen dem Vakuumisolationspaneel und der Umhüllung zu verbessern.

Dies wäre auch schädlich, weil Vakuumisolationspaneele eine diffusionsdichte, vollumfängliche Kaschierung zur Aufrechterhaltung des Vakuums benötigen und diese Kaschierung anfällig für mechanische Krafteinwirkungen ist. Bei dem hier gegebenen Einsatzfall als Fassadendämmung treten jedoch Windsogkräfte auf, welche von der Putzlage und der Umhüllung aufgenommen werden müssen. Besteht hier eine feste Verbindung zwischen der Umhüllung aus geschäumten Kunststoff und der Kaschierung des Vakuumisolationspaneels, so würden die Sogkräfte unmittelbar hierauf übertragen. Aufgrund des Unterdrucks in den Vakuumisolationspaneelen können derartige Kräfte jedoch nur sehr bedingt übertragen werden; vielmehr würde es insbesondere im kritischen Kantenbereich zu einer Zugbelastung der Schweißnähte kommen, was sich negativ auf die mögliche Nutzungsdauer auswirkt. Die Kaschierung könnte dann beschädigt werden, wodurch das Vakuum im Vakuumisolationspaneel verloren ginge. Die Dämmwirkung wäre dann weitestgehend aufgehoben. Bei der im Baubereich geforderten Lebensdauer von weit über zehn Jahren stellt dies ein erhebliches Problem dar. Eine Verklebung kommt bei diesen Fassadendämmplatten somit nicht in Betracht.

Die Problematik des Ausgasens des Zellgases aus einem PUR-Kern eines kombinierten Wärmedämmelements wurde zudem bereits in der DE 31 19 520 A1 aufgegriffen. Das hier offenbarte Dämmelement ist zweiteilig aufgebaut und besteht aus einer Schale aus geschäumtem Polystyrol, in welcher ein Kern aus PUR-Hartschaum angeordnet ist. Der Kern kann dabei mit einer im Wesentlichen gasdichten Oberflächenschicht wie insbesondere einer Aluminiumfolie ummantelt sein. Ferner ist es aus diesem Stand der Technik auch bekannt, den Kern in die Polystyrol-Schale einzukleben oder alternativ die Schale um den Kern herum zu schäumen.

In der Praxis hat sich jedoch gezeigt, dass die Herstellung des Wärmedämmelements gemäß der DE 31 19 520 A1 durchaus aufwendig ist. Wird kein Kleber verwendet, so entsteht keine stabile Verbindung zwischen der Polystyrol-Schale und der Aluminiumfolie am Kern, weil Polystyrol auf diesem Metall nicht haftet. Wenn der Kleber verwendet wird, muss dieser zu einem geeigneten Zeitpunkt an vorbestimmten Stellen aufgetragen und das Element in diesem Zustand gehandhabt werden, wobei dann hierauf abgestimmt Schale und Kern rechtzeitig zusammengeführt werden müssen. Verzichtet man andererseits auf die diffusionsdichte Kaschierung, so lässt sich zwar eine stabile Verbindung zwischen dem Polyurethan und dem Polystyrol herstellen; es geht jedoch die Wärmedämmwirkung durch das Ausgasen des Zellgases nach und nach verloren.

Der Erfindung lag daher die Aufgabe zu Grunde, das Verfahren zur Herstellung eines derartigen Dämmelements zu vereinfachen und dabei zugleich ein Dämmelement zu schaffen, welches auch auf lange Zeit hin seine Dämmeigenschaften, insbesondere die Wärmedämmeigenschaften, aufrecht erhält.

Diese Aufgabe wird durch ein Verfahren mit den Merkmalen des Anspruches 1 gelöst. Dieses enthält die folgenden Schritte: Bereitstellen eines Dämmkerns aus einem ersten Dämmmaterial, Aufbringen eines unter Wärmeeinwirkung aktivierbaren Klebers wenigstens auf Teilbereiche der Außenoberfläche des Dämmkerns, Positionieren des Dämmkerns in einer Form, Umschäumen des Dämmkerns mit einem als zweites Dämmmaterial dienenden Kunststoff, welcher sich vom ersten Dämmmaterial unterscheidet, in der Form zur Bildung einer Umhüllung, welche den Dämmkern vollständig umschließt, und Entnahme des so ausgebildeten Dämmelementes aus der Form, wobei der Kleber im Zuge des Umschäumens des Dämmkerns mit dem zweiten Dämmmaterial durch die hierbei aufgebrachte Wärmeeinwirkung aktiviert wird, so dass das Aufschäumen des zweiten Dämmmaterials und das Verkleben desselben mit dem Dämmkern in einem Verfahrensschritt erfolgen.

Die Erfindung sieht somit vor, einen ganz speziellen Kleber, nämlich einen unter Wärmeeinwirkung aktivierbaren Kleber zum Fixieren der Umhüllung an dem Dämmkern einzusetzen. Damit lässt sich die Teilbaugruppe aus Dämmkern und Kleber völlig problemlos handhaben, da der Kleber bis zu dessen Aktivierung keine Haftung und dementsprechend auch keine Verschmutzungen an unerwünschten Stellen in der Fertigungsanlage herstellt.

Die Aktivierungstemperatur des Kleber liegt in einem Temperaturfenster, welches sich durch die Untergrenze in Form der maximalen Temperatur des jeweiligen Anwendungsfalles des erfindungsgemäßen Produktes, welche im Fall einer Verwendung als Fassadendämmelement bei etwa 70°C liegt, ggf. unter Berücksichtigung eines gewissen Sicherheitszuschlages, und der Obergrenze in Form der Prozesstemperatur der Umschäumung ergibt, ggf. unter Berücksichtigung eines Abschlags zu sicheren Aktivierung des Klebers.

Zugleich ist der Schritt zum Auftragen des Klebers von jenem der Aktivierung desselben zeitlich getrennt, was mit einer Reduzierung der, vor allem zeitlichen, Zwänge in den Verfahrensabläufen verbunden ist. Die Durchführung des erfindungsgemäßen Verfahrens vereinfacht sich dadurch wesentlich.

Vom weiteren Vorteil ist es hierbei, dass die beim Umschäumen des Dämmkerns mit dem zweiten Kunststoff ohnehin gegebene Wärmeenergie zugleich auch dafür genutzt werden kann, den Kleber zu aktivieren. Die Verklebung lässt sich damit sehr energieeffizient durchführen.

Da in diesem Verfahrensschritt somit sowohl der Kleber als auch der aufschäumende Kunststoff der Umhüllung zunächst fließfähig vorliegen, ergibt sich daher eine besonders innige und stabile Verbindung zwischen diesen. Der Kleber und die Umhüllung verschmelzen hier regelrecht miteinander. Eine Grenzfläche zwischen dem Kleber und der Umhüllung ist daher nicht glatt bzw. eben wie beim Verkleben einer vorgefertigten Hartschaumplatte, sondern weist eine gewisse Rauigkeit auf, wodurch sich eine vergrößerte Klebefläche ergibt. Gleichzeitig ist dies mit einem Ineinandergreifen der an der Verbindung beteiligten Komponenten verbunden, wodurch sich sogar eine Art Formschluss ergeben kann und eine besonders gute Haltewirkung erzielt wird.

Da die Umhüllung den Dämmkern vollständig umschließt, lassen sich ferner Risse oder Fehlstellen im Bereich der Verbindungstellen zwischen den hier miteinander kombinierten unterschiedlichen Materialien besonders zuverlässig vermeiden bzw. verbleiben im Inneren des Dämmelementes.

Das erfindungsgemäße Verfahren ist somit gegenüber dem Stand der Technik wesentlich vereinfacht und lässt zudem ein besonders vorteilhaftes Produkt erzielen.

Hierbei ist zwar aus der DE 10 2008 021 305 A1 bzw. der EP 2 111 962 A2 ein Verfahren zur Herstellung einer Mehrschicht-Wärmedämmplatte mit einer Kleberschicht zwischen den Dämmlagen bekannt geworden. Diese Wärmedämmplatte weist dabei einen Kern mit einer Dampfsperrschicht sowie zwei Decklagen auf. Die Kleberschicht besteht aus niedrig schmelzendem Material und wird auf die Dampfsperrschicht aufgebracht. Als Decklage dient ein Polystyrol, welches lose hierauf aufgeschüttet und dann expandiert wird, wobei die Kleberschicht durch die Wärme beim Expandieren erweicht und die Verbindung herstellt.

Die Herstellung eines Dämmelements mit einem vollständigen Einbetten des Dämmkerns geht hieraus jedoch nicht hervor. Vielmehr zielt die Lehre dieses Dokuments offensichtlich darauf ab, eine dämmtechnisch optimierte Platte zu erzielen, welche Seite an Seite mit weiteren Platten angeordnet werden kann, ohne dass an den Stoßstellen Wärmebrücken durch den Umgriff mit dem Material der Decklage gegeben ist.

Die vorliegende Erfindung sieht jedoch bewusst ein vollständiges Umschließen des Kerns vor, um unterschiedliche thermische Ausdehnungen dadurch zu beheben, dass eine Art Dämpfungsbereich in den Randzonen bzw. Stoßbereichen einzelner Dämmelemente im eingebauten Zustand gegeben sind. Dadurch kann eine Rissbildung beispielsweise im Fassadenaufbau vermieden werden.

Vorteilhafte Weiterbildungen des erfindungsgemäßen Verfahrens sind Gegenstand der abhängigen Ansprüche 2 bis 8.

So kann der Dämmkern bei der Bereitstellung mit einer bevorzugt diffusionsdichten Kaschierung auf den Großflächen kaschiert sein. Alternativ ist es auch möglich, den Dämmkern vor dem Aufbringen des Klebers wenigstens teilweise mit einer bevorzugt diffusionsdichten Kaschierung zu ummanteln. Damit wird vorteilhaft die Diffusion der Zellgase unterbunden bzw. erheblich reduziert, was sich günstig auf das Langzeitdämmvermögen des nach dem erfindungsgemäßen Verfahren hergestellten Produktes auswirkt.

So kann als Kleber ein Schmelzkleber eingesetzt werden. Dieser eignet sich besonders gut für die erfindungsgemäßen Zwecke, weil er in nicht aktiviertem Zustand problemlos handhabbar ist und gleichzeitig dennoch sehr gute Haftwirkungen erzielen lässt. Zudem lässt sich ein derartiger Schmelzkleber als normale Handelsware preisgünstig bereitstellen und verarbeiten.

Ferner kann der Kleber auch nur im Bereich der Großflächen des ggf. mindestens teilweise kaschierten Dämmkerns aufgebracht werden, wodurch die erforderliche Klebermenge reduziert werden kann. Dort entfaltet der Kleber am besten seine Wirkung, während er an Stirnflächen etc. nur begrenzt zur Stabilisierung des herzustellenden Elements beitragen könnte. Zudem erleichtert sich hierdurch die Verfahrensweise nochmals dadurch, dass sich der Auftrag des Klebers auf die Bereiche beschränkt, welche typischerweise leicht zugänglich sind, so dass hierzu weniger Einzelschritte erforderlich sind. Gleichzeitig vereinfacht sich dadurch auch die Handhabung des mit dem Kleber versehenen Dämmkerns insbesondere bei dessen Positionierung in der Form, da dann Teilflächen desselben wie z.B. dessen Stirnseitenflächen ohne Kleber vorliegen und daher zum Aufgreifen des Elements besonders geeignet sind.

Hierbei kann das erste Dämmmaterial des Dämmkerns aus einem geschäumten Kunststoff, insbesondere aus einem geschäumten PIR oder PUR, ausgebildet werden, womit ein Dämmstoff zum Einsatz kommt, welcher in der Praxis bewährt ist und besonders gute Wärmedämmeigenschaften aufweist.

Alternativ ist es auch möglich, dass das erste Dämmmaterial des Dämmkerns aus Mineralwolle und/oder einem Aerogel ausgebildet ist. Auch mit diesen Dämmstoffen können hervorragende Dämmeigenschaften erzielt werden.

Vom weiteren Vorteil ist es, wenn die Umhüllung aus einem geschäumten Polystyrol ausgebildet wird. Dieser hier als zweiter Kunststoff eingesetzte Werkstoff hat sich in der Praxis insbesondere an Fassadendämmsystemen besonders gut bewährt, da er sehr gut als Putzträgermaterial geeignet ist. Zugleich lassen sich Polystyrole mit bewährten Mitteln zuverlässig aufschäumen und sind besonders gut geeignet, um wie hier in der vorliegenden Erfindung einen Dämmkern zu umschäumen. Dies wird insbesondere dann erreicht, wenn wie hier im vorliegenden Einsatzfalle als Umhüllung bevorzugt ein expandiertes Polystyrol (EPS) eingesetzt wird.

Wenn die Kaschierung eine Metallfolie ist, wird eine besonders gute Diffusionsdichtheit erzielt. Zudem lässt sich eine derartige Metallfolie verfahrenstechnisch gut handhaben, so dass sich das erfindungsgemäße Verfahren weiter vereinfacht. Insbesondere kommt hierbei eine Aluminiumfolie zum Einsatz, weil diese in sehr dünnen Lagen und mit einem geringen Gewicht bereitstellbar ist und eine sehr gute Diffusionsdichtheit aufweist.

Ferner ist möglich, dass die Kaschierung den Dämmkern vollständig ummantelt. Dann lässt sich der Dämmkern bei Verwendung einer diffusionsdichten Kaschierung allseits diffusionsdicht abschließen, wodurch dieser seine hervorragenden Dämmeigenschaften besonders lange aufrechterhalten kann. Zugleich lässt sich die vollständige Ummantelung des Dämmkerns mit der Kaschierung in verfahrenstechnischer Hinsicht mit geringem Aufwand herstellen.

Gemäß einem weiteren Aspekt der vorliegenden Erfindung wird nach Anspruch 9 ein Dämmelement mit wenigstens zwei unterschiedlichen Dämmmaterialien bereitgestellt, welches vorzugsweise nach dem erfindungsgemäßen Verfahren hergestellt ist. Dieses enthält dabei einen Dämmkern aus einem ersten Dämmmaterial, und eine Umhüllung aus einem als zweites Dämmmaterial dienenden Kunststoff, welcher sich vom ersten Dämmmaterial unterscheidet, wobei die Umhüllung den Dämmkern vollständig umschließt. Das erfindungsgemäße Dämmelement zeichnet sich dabei insbesondere dadurch aus, dass wenigstens auf Teilbereichen der Außenoberfläche des Dämmkerns ein Kleber vorliegt, dass die Umhüllung an einer Grenzfläche mit dem Kleber verbunden ist sowie mittels dem Kleber an dem Dämmkern haftet, und dass der Kleber und die Umhüllung an der Grenzfläche miteinander verschmolzen sind.

Wie oben bereits dargelegt wurde, greifen bei dem so ausgestalteten, erfindungsgemäßen Dämmelement der Kleber und der als zweites Dämmmaterial dienende Kunststoff an der Grenzfläche vorteilhaft ineinander und stellen so eine innige Verbindung bereit. Diese Grenzfläche zwischen den miteinander verschmolzenen Komponenten weist eine gewisse Rauigkeit auf und bietet eine große Angriffsfläche für den Kleber an. Unter einem Verschmelzen ist im Rahmen der Erfindung zu verstehen, dass hier der Schmelzkleber aufgrund des Wärmeenergieeintrags beim Aufschäumen des zweiten Kunststoffes fließfähig und verformbar vorliegt sowie seine Haftkraft entfaltet. Die expandierenden Kunststoffpartikel dringen dabei zeitgleich in die Klebermasse ein, verformen diese und werden hierbei durchaus auch selbst verformt. So ergibt sich nach dem Aushärten des Klebers und der Verfestigung des Kunststoffes eine unregelmäßige Grenzfläche zwischen dem Kleber und dem zweiten Kunststoff. Letzterer wird daher durch die Haftkraft des Klebers auf der so vergrößerten Verbindungsfläche wie auch durch einen gewissen Formschluss gehalten.

Ferner lassen sich durch die vollständige Umhüllung des Dämmkerns Risse und Fehlstellen im Bereich von Verbindungsstellen bzw. Stoßkanten zwischen den Dämmelementen vermeiden, da außenseitig das gleiche Material vorliegt und somit keine unterschiedlichen Wärmedehnungen gegeben sind.

Somit wird erfindungsgemäß ein besonders stabiles und langlebiges Dämmelement erzielt.

Es ist zudem vielseitig einsetzbar, da je nach Wahl der verwendeten Dämmmaterialien besonders günstige Materialeigenschaften insbesondere hinsichtlich der Dämmfähigkeit, der Eignung als Putzuntergrund oder dergleichen einstellbar sind.

Vorteilhafte Weiterbildungen des erfindungsgemäßen Dämmelements sind Gegenstand der abhängigen Ansprüche 10 bis 16. Hiermit werden die oben anhand der abhängigen Verfahrensansprüche erläuterten Vorteile gleichermaßen erzielt.

Die Erfindung wird nachfolgend in Ausführungsbeispielen anhand der Figuren der Zeichnung näher erläutert. Es zeigt:
- Fig. 1: eine perspektivische, teilweise im Schnitt gehaltene Ansicht eines erfindungsgemäßen Dämmelements;
- Fig. 2: eine perspektivische Ansicht eines Dämmkerns;
- Fig. 3: eine perspektivische, teilweise im Schnitt gehaltene Ansicht eines Dämmkerns mit einer vollumfänglichen Kaschierung;
- Fig. 4: eine perspektivische Ansicht eines mit der Kaschierung umhüllten Dämmkerns mit auf einer Außenoberfläche der Kaschierung aufgebrachten Kleber;
- Fig. 5: eine Schnittansicht einer Form, in welcher der mit der Kaschierung ummantelte Dämmkern positioniert ist; und
- Fig. 6: eine Schnittansicht ähnlich Figur 5, wobei hier der Dämmkern umschäumt und so die Umhüllung ausgebildet ist.

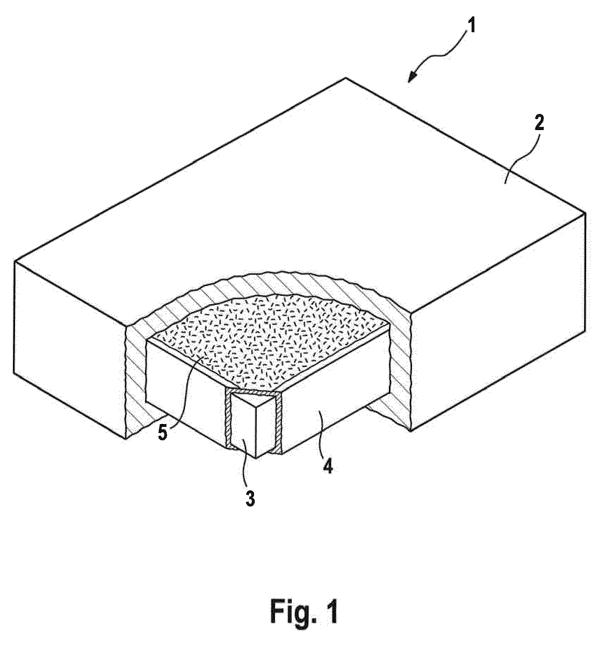

Gemäß der Darstellung in Fig. 1 weist ein Dämmelement 1 eine Umhüllung 2 auf, welche aus einem geschäumten Polystyrol ausgebildet ist. Diese umschließt vollständig einen Dämmkern 3, der seinerseits vollumfänglich von einer Kaschierung 4 ummantelt ist. Auf einem Teilbereich der Außenoberfläche der Kaschierung 4, hier im Bereich der beiden Großflächen des Dämmkerns 3, ist ferner ein Kleber 5 flächig aufgetragen, was in der Darstellung jedoch nur auf der oberen Seite erkennbar ist. Der Kleber 5 ist hier als Schmelzkleber ausgebildet.

Das Dämmelement 1 bildet hier somit ein fest gefügtes, stabiles Bauelement in Gestalt einer Dämmplatte, welche als Fassadendämmelement, Dachdämmelement oder dergleichen eingesetzt werden kann. Es weist im gezeigten Beispiel eine Wärmeleitfähigkeit λ von etwa 0,027 W/mK auf.

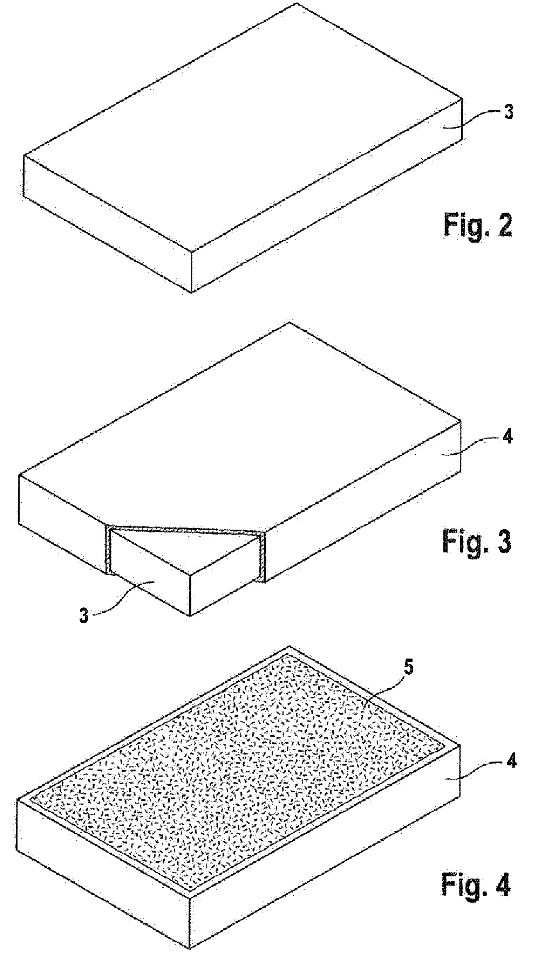

Aus den Fig. 2 bis 6 sind einzelne Verfahrensschritte zur Herstellung des erfindungsgemäßen Dämmelements entnehmbar.

Fig. 2 zeigt den Dämmkern 3, wie er als plattenförmiges Formteil vorgefertigt bereitgestellt wird. Er ist aus PIR ausgebildet und weist damit eine besonders geringe Wärmeleitfähigkeit auf.

Dieser Dämmkern 3 wird mit der Kaschierung 4 vollumfänglich ummantelt, wie dies Fig. 3 zeigt. Die Kaschierung 4 ist dabei als diffusionsdichte Aluminiumfolie ausgebildet.

In Fig. 4 ist der mit der Kaschierung 4 ummantelte Dämmkern gezeigt, wobei auf den beiden Großflächen der Kaschierung 4 jeweils flächig der Kleber 5 aufgetragen ist. In der Darstellung ist lediglich die obere Großfläche zu sehen; der Kleber 5 ist jedoch gleichermaßen auch auf der unteren Großfläche aufgetragen.

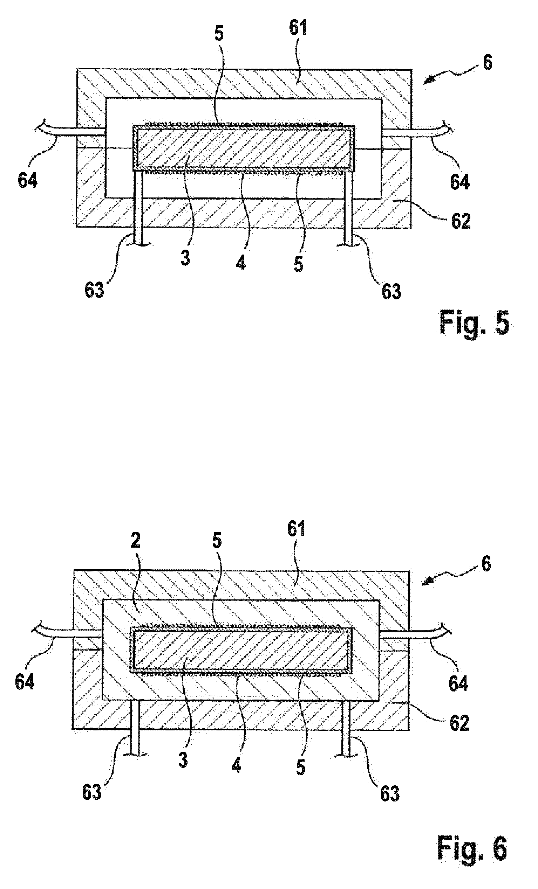

Fig. 5 zeigt eine Schnittansicht einer Form 6, in der das Dämmelement 1 fertig ausgebildet wird. Diese Form 6 weist eine obere Formhälfte 61 sowie eine untere Formhälfte 62 auf. Der entsprechend Figur 4 vorbereitete, mit der Kaschierung 4 ummantelte Dämmkern 3 mit dem Kleber 5 wird in einem weiteren Verfahrensschritt wie in Figur 5 gezeigt in der Form angeordnet. Er liegt dabei auf einer Mehrzahl an Stützstiften 63 auf, welche eine geeignete Positionierung des Dämmkerns 3 ermöglichen.

In der gezeigten Darstellung sind in der oberen Formhälfte 61 ferner Einschäumöffnungen 64 ausgebildet, von denen hier zwei beispielhaft angedeutet sind. Die Anzahl und Positionierung der Einschäumöffnungen 64 richtet sich nach den jeweiligen Gegebenheiten. Es können auch Einschäumöffnungen zusätzlich oder alternativ an der unteren Formhälfte 62 vorliegen.

Gemäß der Darstellung in Figur 6 wird durch die Einschäumöffnungen 64 schließlich der Kunststoff für die Umhüllung 2 in die Form 6 eingebracht und dort verschäumt. Im Zuge des Ausschäumens in der Form 6 werden zu einem geeigneten Zeitpunkt die Stützstifte 63 zurückgezogen, so dass auch deren Bereich mit verschäumt werden kann, ohne dass der Dämmkern 3 die vorgesehene Position im Inneren der Umhüllung 2 verlässt.

Das Verschäumen des Polystyrols für die Umhüllung 2 findet dabei unter Wärmeeinwirkung statt. Typischerweise erfolgt dies in einem Temperaturbereich zwischen ca. 90 °C und 100 °C. Der als Kleber 5 verwendete Schmelzkleber ist so gewählt, dass er in diesem Temperaturbereich reaktiv ist, weshalb er dementsprechend unter dieser Wärmeeinwirkung aktiviert wird. Damit verschmelzen das Polystyrol der Umhüllung 2 und der Kleber 5 in diesem Verfahrensschritt miteinander. Die zwischen diesen vorliegende Grenzfläche ergibt sich rein zufällig durch das Eindringen der aufschäumenden Polystyrolpartikel in die Kleberschicht um ein mehr oder weniger großes Maß. Damit liegt eine vergleichsweise große Verbindungsoberfläche zwischen diesen Komponenten vor. Die Umhüllung 2 haftet dementsprechend fest am Kleber 5 und vermittels diesem auf der Aluminiumfolie 4.

Nach dem Aushärten des Kunststoffs der Umhüllung 2 wird die Form 6 geöffnet und das so ausgebildete Dämmelement 1 entnommen.

Die Erfindung lässt neben der erläuterten Ausführungsform weitere Gestaltungsansätze zu.

So kann als Kunststoff für den Dämmkern 3 auch ein Polyurethan (PUR) oder ein anderer gut dämmender geschäumter Kunststoff wie zum Beispiel Phenolharz-Hartschaum (PH), expandiertes Polyethylen (EPE), expandiertes Polypropylen (EPP), Polylactate oder dergleichen eingesetzt werden.

Alternativ ist es auch möglich, dass der Dämmkern eine Mineralwolle und/oder ein Aerogel oder dgl. als Dämmmaterial aufweist.

Auch für die Umhüllung 2 kann ein anderer Werkstoff als Polystyrol (EPS) verwendet werden, wie zum Beispiel expandiertes Polyethylen (EPE), expandiertes Polypropylen (EPP) oder dergleichen.

Anstelle eines Schmelzklebers kann für den Kleber 5 auch jeder andere, unter Wärmeeinwirkung aktivierbare Klebstoff eingesetzt werden. Beispiele hierfür sind unter anderem auch spezielle Mehrkomponentenkleber etc.

Ferner ist es auch möglich, dass der Kleber 5 nicht nur teilflächig, sondern auf sämtliche Flächen des Dämmkerns 3 bzw. der Kaschierung 4 aufgebracht wird. Zudem muss der Kleber 5 nicht flächig aufgetragen sein, sondern kann auch punktuell, streifenförmig oder in Gittermustern etc. vorliegen.

Im gezeigten Ausführungsbeispiel umschließt die diffusiondichte Kaschierung 4 in Form einer Aluminiumfolie den Dämmkern 3 vollständig. Für manche Anwendungsfälle kann es jedoch auch hinreichend sein, wenn nur die Großflächen des Dämmkerns 3 und evtl. einzelne Seitenkantenflächen von der Aluminiumfolie 4 umschlossen sind. Dann ist zwar an den nicht überdeckten Bereichen ein Ausgasen des Zellgases möglich; in manchen Einsatzfällen kann dies jedoch vernachlässigbar sein. Diese Variante reduziert jedenfalls den Aufwand zum Anbringen der Kaschierung 4 am Dämmkern 3.

Die diffusionsdichte Kaschierung 4 kann auch aus einem anderen Material als aus Aluminium bestehen. Grundsätzlich wäre es hier beispielsweise möglich, eine dünne Edelstahlfolie einzusetzen. Alternativ können jedoch auch diffusionsdichte Kunststofffolien oder Kunststoffverbundfolien eventuell mit einer Metallbedampfung etc. verwendet werden.

Im vorliegenden Ausführungsbeispiel verschäumt der Kunststoff für die Umhüllung 2 in einem Temperaturbereich zwischen 90 °C und 100 °C. Dies ist für viele Anwendungsfälle ein geeigneter Bereich. Selbstverständlich hängt der Temperaturbereich jedoch von der Art des eingesetzten Kunststoffes ab und gibt somit letztendlich vor, bei welcher Temperatur der Kleber 5 aktivierbar sein muss. Diese ist dann dementsprechend passend zu wählen.

Ferner ist es auch möglich, dass das erfindungsgemäße Dämmelement auch aus mehr als zwei unterschiedlichen geschäumten Kunststoffen als Dämmmaterial besteht. Für manche Anwendungsfälle kann es sinnvoll sein, mehrere Lagen an geschäumten Dämmstoffen miteinander zu kombinieren, wobei dies völlig unterschiedliche Dämmstoffe sein können oder sich auch zum Beispiel zwei verschiedene Dämmstoffe im Schichtaufbau abwechseln. Auch andere Dämmmaterialien wie Mineralwolle und/oder Aerogele etc. lassen sich in einem solchen Schichtaufbau integrieren.

Zur verbesserten Putzhaftung bei bestimmten Anwendungen kann eine außenseitige Profilierung der Umhüllung vorgesehen werden.

## Patentansprüche

1. Verfahren zur Herstellung eines Dämmelements (1) mit wenigstens zwei unterschiedlichen Dämmmaterialien, mit den Schritten:
Bereitstellen eines Dämmkerns (3) aus einem ersten Dämmmaterial,
Aufbringen eines unter Wärmeeinwirkung aktivierbaren Klebers (5) wenigstens auf Teilbereiche der Außenoberfläche des Dämmkerns (4),
Positionieren des Dämmkerns (3) in einer Form (6),
Umschäumen des Dämmkerns (3) mit einem als zweites Dämmmaterial dienenden Kunststoff, welcher sich vom ersten Dämmmaterial unterscheidet, in der Form zur Bildung einer Umhüllung (2), welche den Dämmkern (3) vollständig umschließt, und
Entnahme des so ausgebildeten Dämmelements (1) aus der Form (6),
wobei der Kleber (5) im Zuge des Umschäumens des Dämmkerns (3) mit dem zweiten Dämmmaterial durch die hierbei aufgebrachte Wärmeeinwirkung aktiviert wird, so dass das Aufschäumen des zweiten Dämmmaterials und das Verkleben desselben mit dem Dämmkern in einem Verfahrensschritt erfolgen.

2. Verfahren nach Anspruch 1, **dadurch gekennzeichnet, dass** der Dämmkern bei der Bereitstellung mit einer bevorzugt diffusionsdichten Kaschierung auf den Großflächen kaschiert ist, oder dass der Dämmkern vor dem Aufbringen des Klebers wenigstens teilweise mit einer bevorzugt diffusionsdichten Kaschierung ummantelt wird.

3. Verfahren nach Anspruch 1 oder 2, **dadurch gekennzeichnet, dass** als Kleber (5) ein Schmelzkleber eingesetzt wird.

4. Verfahren nach einem der Ansprüche 1 bis 3, **dadurch gekennzeichnet, dass** der Kleber (5) nur im Bereich der Großflächen des ggf. kaschierten Dämmkerns (3) aufgebracht wird.

5. Verfahren nach einem der Ansprüche 1 bis 4, **dadurch gekennzeichnet, dass** das erste Dämmmaterial des Dämmkerns (3) aus einem geschäumten Kunststoff, insbesondere aus einem geschäumten PIR oder PUR, ausgebildet wird, oder dass das erste Dämmmaterial des Dämmkerns aus Mineralwolle und/oder einem Aerogel ausgebildet wird.

6. Verfahren nach einem der Ansprüche 1 bis 5, **dadurch gekennzeichnet, dass** die Umhüllung (2) aus einem geschäumten Polystyrol, insbesondere EPS, ausgebildet wird.

7. Verfahren nach einem der Ansprüche 2 bis 6, **dadurch gekennzeichnet, dass** als Kaschierung (4) eine Metallfolie, insbesondere eine Aluminiumfolie, verwendet wird.

8. Verfahren nach einem der Ansprüche 2 bis 7, **dadurch gekennzeichnet, dass** die Kaschierung (4) den Dämmkern (3) vollständig ummantelt.

9. Dämmelement (1) mit wenigstens zwei unterschiedlichen Dämmmaterialien, vorzugsweise hergestellt nach einem Verfahren gemäß einem der Ansprüche 1 bis 8, mit:
einem Dämmkern (3) aus einem ersten Dämmmaterial, und
einer Umhüllung (2) aus einem als zweites Dämmmaterial dienenden Kunststoff, welcher sich vom ersten Dämmmaterial unterscheidet, wobei die Umhüllung (2) den Dämmkern (3) vollständig umschließt,
**dadurch gekennzeichnet,**
**dass** wenigstens auf Teilbereichen der Außenoberfläche des Dämmkerns (3) ein Kleber (5) vorliegt,
**dass** die Umhüllung (2) an einer Grenzfläche mit dem Kleber (5) verbunden ist sowie mittels dem Kleber (5) an dem Dämmkern (3) haftet, und
**dass** der Kleber (5) und die Umhüllung (2) an der Grenzfläche miteinander verschmolzen sind.

10. Dämmelement nach Anspruch 9, **dadurch gekennzeichnet, dass** der Dämmkern von einer vorzugsweise diffusionsdichten Kaschierung (4) wenigstens teilweise ummantelt ist.

11. Dämmelement nach Anspruch 9 oder 10, **dadurch gekennzeichnet, dass** der Kleber (5) ein Schmelzkleber ist.

12. Dämmelement nach einem der Ansprüche 9 bis 11, **dadurch gekennzeichnet, dass** der Kleber (5) nur im Bereich der Großflächen des Dämmkerns (3), ggf. auf der Kaschierung (4), vorliegt.

13. Dämmelement nach einem der Ansprüche 9 bis 12, **dadurch gekennzeichnet, dass** das erste Dämmmaterial des Dämmkerns (3) ein geschäumter Kunststoff ist, und insbesondere aus einem geschäumten PIR oder PUR ausgebildet ist, oder dass das erste Dämmmaterial des Dämmkerns Mineralwolle und/oder ein Aerogel ist.

14. Dämmelement nach einem der Ansprüche 9 bis 13, **dadurch gekennzeichnet, dass** die Umhüllung (2) aus einem geschäumten Polystyrol, insbesondere EPS, ausgebildet ist.

15. Dämmelement nach einem der Ansprüche 10 bis 14, **dadurch gekennzeichnet, dass** die Kaschierung (4) eine Metallfolie, insbesondere eine Aluminiumfolie, ist.

16. Dämmelement nach einem der Ansprüche 10 bis 15, **dadurch gekennzeichnet, dass** die Kaschierung (4) den Dämmkern (3) vollständig ummantelt.
